# EUROPÄISCHE PATENTANMELDUNG

(11) **EP 4 344 811 A1**
(43) Veröffentlichungstag der Anmeldung: **03.04.2024**
(21) Anmeldenummer: 23198730.6
(22) Anmeldetag: 21.09.2023
(51) Int. Cl.: B23F 5/16, B23F 19/00, B23F 21/04

(54) **VERFAHREN ZUM ERZEUGEN VON ZAHNFLANKENMODIFIKATIONEN AN ZAHNFLANKEN EINER WERKSTÜCKVERZAHNUNG EINES WERKSTÜCKS**

(30) Priorität: 28.09.2022 DE 102022124966
(71) Anmelder: Präwema Antriebstechnik GmbH, 37269 Eschwege/Werra (DE)
(72) Erfinder: SCHIEKE, Jörg, 99092 Erfurt (DE); HOLDERBEIN, Walter, 37269 Eschwege (DE); REINHARDT, Jörg, 99826 Barka v. d. H. (DE)
(74) Vertreter: Cohausz & Florack

(57) **Zusammenfassung**

Beschrieben und dargestellt ist ein Verfahren zum Erzeugen von Zahnflankenmodifikationen, insbesondere Verschränkungen, an Zahnflanken (10,10',11,11') wenigstens einer Werkstückverzahnung (8,8') wenigstens eines Werkstücks (2), insbesondere Zahnrads (2). Damit das Erzeugen von Zahnflankenmodifikationen an Werkstückverzahnungen von Werkstücken wirtschaftlicher erfolgen kann, ist vorgesehen, dass das Erzeugen der Zahnflankenmodifikationen durch Wälzschälen mittels eines Wälzschälwerkzeugs (6) erfolgt, dass das Werkstück (2) um eine Werkstückdrehachse (AWS) und das Wälzschälwerkzeug (6) um eine in einem Achskreuzwinkel (α) zu der Werkstückdrehachse (AWS) schräg, insbesondere windschief, angeordnete Werkzeugdrehachse (AWZ) drehend angetrieben werden, dass das, insbesondere um die Werkzeugdrehachse (AWZ) drehende, Wälzschälwerkzeug (6) in spanenden Eingriff mit dem, insbesondere um die Werkstückdrehachse (AWS) drehenden, Werkstück (2) gebracht wird, dass das mit dem Werkstück (2) in spanendem Eingriff stehende und um die Werkzeugdrehachse (AWZ) drehende Wälzschälwerkzeug (6) relativ zu dem um die Werkstückdrehachse (AWS) drehenden Werkstück (2) entlang einer zu der Werkstückdrehachse (AWS) oder der Werkzeugdrehachse (AWZ) wenigstens im Wesentlichen parallelen Längsachse (L) bewegt wird und dass zum Erzeugen der Zahnflankenmodifikationen das sich entlang der Längsachse (L) bewegende Wälzschälwerkzeug (6) relativ zu dem Werkstück (2) entlang wenigstens einer zu der Längsachse (L) wenigstens im Wesentlichen senkrechten Querachse (Q) bewegt wird.

## Beschreibung

Die Erfindung betrifft ein Verfahren zum Erzeugen von Zahnflankenmodifikationen, insbesondere Verschränkungen, an Zahnflanken wenigstens einer Werkstückverzahnung wenigstens eines Werkstücks, insbesondere Zahnrads, durch Wälzschälen mittels eines Wälzschälwerkzeugs.

Beim Wälzschälen handelt es sich um ein spanendes Bearbeitungsverfahren mit geometrisch bestimmter Schneide, das üblicherweise zum Erzeugen von Werkstückverzahnungen an Werkstücken wie Zahnrädern etwa für Getriebe zum Einsatz kommt. Beim Wälzschälen werden das Werkstück und ein Wälzschälwerkzeug, mit dem das Werkstück spanend bearbeitet wird, drehend angetrieben. Charakteristisch für das Wälzschälen ist dabei, dass die Werkstückdrehachse, um die das Werkstück rotiert, und die Werkzeugdrehachse, um die das Wälzschälwerkzeug rotiert, in einem Achskreuzwinkel schräg zueinander angeordnet sind. Zur Bearbeitung des Werkstücks wird das Wälzschälwerkzeug in spanenden Eingriff mit dem Werkstück gebracht. Sodann wird das mit dem Werkstück in spanendem Eingriff stehende und um die Werkzeugdrehachse drehende Wälzschälwerkzeug relativ zu dem um die Werkstückdrehachse drehenden Werkstück entlang einer Längsachse bewegt, die wenigstens im Wesentlichen parallel zur Werkstückdrehachse oder Werkzeugdrehachse angeordnet ist. Beim Bewegen entlang der Längsachse erzeugt das Wälzschälwerkzeug typischerweise die Zahnlücken zwischen den Werkstückzähnen der Werkstückverzahnung.

Es ist bekannt, dass das Einsatzverhalten von Verzahnungen etwa von Zahnrädern nicht nur durch die Makrogeometrie der Verzahnung, wie beispielsweise die Zahnbreite der Zähne der Verzahnung, die Anzahl der Zähne und das Modul, beeinflusst werden kann, sondern auch durch die Mikrogeometrie der Zahnflanken der Zähne. So kann durch eine gezielte Erzeugung von sogenannten Zahnflankenmodifikationen an den Zahnflanken verhindert werden, dass es im Gebrauch zu einer ungleichmäßigen Belastung der Zahnflanken und/oder zu Verformungen der Zähne aufgrund der auf die Zähne wirkenden Kräfte kommt. Auf diese Weise können insbesondere Zahneingriffsstöße vermieden und das Tragbild der Verzahnung verbessert werden, was letztlich eine größere Tragfähigkeit, eine höhere Lebensdauer, eine gleichmäßigere Kraftübertragung und ein besseres Geräuschverhalten ermöglicht.

Zahnflankenmodifikationen an Werkstückverzahnungen von Werkstücken werden üblicherweise erzeugt, indem die beispielsweise bei einer spanenden Grobbearbeitung etwa durch Wälzschälen erzeugte Werkstückverzahnung mittels eines typischerweise harz- oder keramisch gebundenen Werkzeugs mit geometrisch unbestimmter Schneide feinbearbeitet wird. Diese Feinbearbeitung erfolgt meist durch Wälzschleifen mittels eines Schleifwerkzeugs oder durch Verzahnungshonen mittels eines Honwerkzeugs. Zur Verringerung der Bearbeitungszeit weisen die Feinbearbeitungswerkzeuge dabei häufig eine Geometrie auf, die der angestrebten Geometrie der Werkstückverzahnung entspricht und die bei der Feinbearbeitung auf die Werkstückverzahnung übertragen wird. Vor der erstmaligen Verwendung und nach einer gewissen Einsatzdauer und dem damit einhergehenden Verschleiß werden entsprechende Werkzeuge typischerweise mit einem Abrichtwerkzeug abgerichtet, um die gewünschte Werkzeuggeometrie (wieder-)herzustellen.

Mit den bekannten Verfahren können Zahnflankenmodifikationen an Werkstücken bisher noch nicht mit der gewünschten Wirtschaftlichkeit erzeugt werden.

Daher liegt der vorliegenden Erfindung die Aufgabe zugrunde, das Verfahren der eingangs genannten und zuvor näher beschriebenen Art derart auszugestalten und weiterzubilden, dass das Erzeugen von Zahnflankenmodifikationen an Werkstückverzahnungen von Werkstücken wirtschaftlicher erfolgen kann.

Diese Aufgabe ist gemäß Anspruch 1 gelöst durch ein Verfahren zum Erzeugen von Zahnflankenmodifikationen, insbesondere Verschränkungen, an Zahnflanken wenigstens einer Werkstückverzahnung wenigstens eines Werkstücks, insbesondere Zahnrads, durch Wälzschälen mittels eines Wälzschälwerkzeugs,
- bei dem das Werkstück um eine Werkstückdrehachse und das Wälzschälwerkzeug um eine in einem Achskreuzwinkel zu der Werkstückdrehachse schräg, insbesondere windschief, angeordnete Werkzeugdrehachse drehend angetrieben werden,
- bei dem das, insbesondere um die Werkzeugdrehachse drehende, Wälzschälwerkzeug in spanenden Eingriff mit dem, insbesondere um die Werkstückdrehachse drehenden, Werkstück gebracht wird,
- bei dem das mit dem Werkstück in spanendem Eingriff stehende und um die Werkzeugdrehachse drehende Wälzschälwerkzeug relativ zu dem um die Werkstückdrehachse drehenden Werkstück entlang einer zu der Werkstückdrehachse oder der Werkzeugdrehachse wenigstens im Wesentlichen parallelen Längsachse bewegt wird und
- bei dem zum Erzeugen der Zahnflankenmodifikationen das sich entlang der Längsachse bewegende Wälzschälwerkzeug relativ zu dem Werkstück entlang wenigstens einer zu der Längsachse wenigstens im Wesentlichen senkrechten Querachse bewegt wird.

Die Erfindung hat erkannt, dass sich durch Wälzschälen in besonders wirtschaftlicher Weise Zahnflankenmodifikationen an Zahnflanken einer Werkstückverzahnung eines Werkstücks erzeugen lassen. Dazu wird das Wälzschälwerkzeug, während es relativ zu dem Werkstück, insbesondere kontinuierlich und/oder translatorisch, entlang der Längsachse bewegt wird, zusätzlich relativ zu dem Werkstück, insbesondere kontinuierlich und/oder translatorisch, entlang einer Querachse bewegt, die wenigstens im Wesentlichen senkrecht zu der Längsachse angeordnet ist. Das Bewegen des Wälzschälwerkzeugs entlang der Querachse trägt also insbesondere zur Erzeugung der Zahnflankenmodifikationen bei. Auf diese Weise kann das Werkstück beispielsweise vor einer Feinbearbeitung näher an die gewünschte Endgeometrie gebracht werden und so nicht nur die Zeit für die nachfolgende Feinbearbeitung, sondern auch die Bearbeitungszeit insgesamt verkürzt werden. Dabei können durch das Erzeugen der Zahnflankenmodifikationen beispielsweise Härteverzüge kompensiert werden, die bei einer bedarfsweise zwischen der Wälzschälbearbeitung und der Feinbearbeitung stattfindenden Wärmebehandlung an dem Werkstück auftreten können.

Auch wenn es grundsätzlich nicht ausgeschlossen sein soll, muss die Form der mit dem Wälzschälwerkzeug zu erzeugenden Zahnflankenmodifikation nicht, zumindest nicht exakt, in das Wälzschälwerkzeug eingebracht sein. Vielmehr kann die Erzeugung der Zahnflankenmodifikationen vorzugsweise wenigstens im Wesentlichen ausschließlich durch Bewegungen des Wälzschälwerkzeugs relativ zu dem Werkstück erfolgen. Dies ermöglicht die Erzeugung unterschiedlich gestalteter Zahnflankenmodifikationen mit demselben Wälzschälwerkzeug. Unabhängig davon ist es grundsätzlich denkbar, dass das Wälzschälwerkzeug zur Erzeugung der Zahnflankenmodifikationen entlang von zwei zueinander und zu der Längsachse wenigstens im Wesentlichen senkrechten Querachsen relativ zu dem Werkstück bewegt wird. Hinsichtlich eines geringen maschinellen und steuerungstechnischen Aufwands ist es jedoch bevorzugt, wenn das Wälzschälwerkzeug und das Werkstück lediglich entlang einer zu der Längsachse senkrechten Querachse relativ zueinander bewegt werden.

Unter einer Zahnflankenmodifikation wird vorzugsweise eine, insbesondere kontinuierliche, Querschnittsänderung eines Werkstückzahns, insbesondere einer Zahnflanke eines Werkstückzahns, der Werkstückverzahnung über der Zahnbreite des Werkstückzahns verstanden. Unabhängig davon kann es sich positiv auf das Einsatzverhalten des Werkstücks auswirken, wenn sich die Zahnflankenmodifikationen jeweils über wenigstens 20 %, vorzugsweise wenigstens 50 %, insbesondere wenigstens 80 %, der Zahnbreite des zugehörigen Werkstückzahns der Werkstückverzahnung erstrecken. Dabei ist mit der Zahnbreite eines Werkstückzahns grundsätzlich beispielsweise dessen Erstreckung entlang der Werkstückdrehachse gemeint.

Bei den Zahnflankenmodifikationen kann es sich insbesondere um sogenannte Verschränkungen handeln. Die Erzeugung von Verschränkungen ist typischerweise besonders aufwendig, sodass die Vorteile der Erfindung besonders zum Tragen kommen. Dabei ist mit einer Verschränkung einer Zahnflanke vorzugsweise eine Verwindung der Zahnflanke, insbesondere um die Flankenlinie der Zahnflanke, gemeint.

Bei dem Werkstück handelt es sich vorzugsweise nicht um ein Werkzeug, das wiederum selbst zur, insbesondere spanenden, Bearbeitung von Werkstücken vorgesehen ist. Das Werkstück kann vielmehr zur Kraftübertragung, beispielsweise in einem Getriebe, vorgesehen sein. Dementsprechend handelt es sich bei dem Wälzschälwerkzeug vorzugsweise auch nicht um ein Abrichtwerkzeug, das insbesondere zum Abrichten anderer Werkzeuge vorgesehen ist.

Das Werkstück kann vorzugsweise ein, beispielsweise innenverzahntes und/oder außenverzahntes, Zahnrad, etwa für ein Getriebe, sein. Zahnräder sind in der Praxis besonders häufig mit Zahnflankenmodifikationen zu versehen, sodass die Vorteile der Erfindung besonders zum Tragen kommen. Unabhängig von der Ausbildung des Werkstücks kann das Wälzschälwerkzeug zweckmäßig eine Mehrzahl an Schneidkanten aufweisen, die bei der Erzeugung der Zahnflankenmodifikationen in spanenden Eingriff mit dem Werkstück gelangen.

Die Werkzeugdrehachse und die Werkstückdrehachse können vorzugsweise windschief zueinander angeordnet sein. Dann schneiden sich die Drehachsen also insbesondere nicht. Unabhängig davon kann der Achskreuzwinkel zwischen der Werkzeugdrehachse und der Werkstückdrehachse während der spanenden Bearbeitung des Werkstücks beispielsweise wenigstens 5° und/oder höchstens 40° betragen. Dabei kann ein Achskreuzwinkel von wenigstens 10 °, bedarfsweise wenigstens 15 °, und/oder höchstens 35°, bedarfsweise höchstens 30°, hinsichtlich einer effizienten Bearbeitung besonders bevorzugt sein.

Das Wälzschälwerkzeug kann zweckmäßigerweise um die Werkzeugdrehachse rotieren, wenn das Wälzschälwerkzeug mit dem Werkstück in spanenden Eingriff gebracht wird. Alternativ oder zusätzlich kann aus demselben Grund auch das Werkstück um die Werkstückdrehachse rotieren, wenn das Wälzschälwerkzeug mit dem Werkstück in spanenden Eingriff gebracht wird.

Das Bewegen des Wälzschälwerkzeugs relativ zu dem Werkstück entlang der Längsachse dient insbesondere dazu, das Wälzschälwerkzeug entlang den Werkstückzähnen der Werkstückverzahnung zu bewegen. Es kann daher zweckmäßig sein, wenn die Strecke, die das mit dem Werkstück in spanendem Eingriff stehende Wälzschälwerkzeug entlang der Längsachse bewegt wird, wenigstens 50 %, vorzugsweise wenigstens 75 %, insbesondere wenigstens 90 %, der Zahnbreite der Werkstückzähne der Werkstückverzahnung beträgt. Besonders bevorzugt kann es in diesem Zusammenhang sein, wenn die entsprechende Strecke wenigstens so lang ist wie die Zahnbreite der Werkstückzähne.

Das Werkstück kann einfach und zweckmäßig von einem Werkstückdrehantrieb um die Werkstückdrehachse drehend angetrieben werden. Alternativ oder zusätzlich kann aus demselben Grund das Wälzschälwerkzeug von einem Werkzeugdrehantrieb um die Werkzeugdrehachse drehend angetrieben werden. Unabhängig davon kann das Wälzschälwerkzeug von wenigstens einem Stellantrieb, beispielsweise Linearantrieb, relativ zu dem Werkstück entlang der Längsachse und/oder der Querachse bewegt werden. Vorzugsweise sind wenigstens zwei Stellantriebe vorgesehen, wobei einer für die Bewegung entlang der Längsachse und der andere für die Bewegung entlang der Querachse vorgesehen sein kann. Der wenigstens eine Antrieb kann beispielsweise Teil einer Werkzeugmaschine sein.

Bei einer ersten besonders bevorzugten Ausgestaltung des Verfahrens wird der Achskreuzwinkel zwischen der Werkzeugdrehachse und der Werkstückdrehachse unverändert beibehalten, während die Zahnflankenmodifikationen erzeugt werden. Dann kann der Achskreuzwinkel also unverändert bleiben, solange das Wälzschälwerkzeug mit dem Werkstück in spanendem Eingriff steht. So kann der maschinelle und steuerungstechnische Aufwand reduziert werden. Dann kann nämlich auf eine Einrichtung, die den Achskreuzwinkel kontinuierlich nachführt, sowie auf entsprechende Steuerungsmechanismen verzichtet werden. Vielmehr kann der Achskreuzwinkel in einfacher Weise, beispielsweise mittels einer einfachen Einstelleinrichtung, eingestellt werden, bevor das Wälzschälwerkzeug in spanenden Eingriff mit dem Werkstück gebracht wird. Während der anschließenden spanenden Bearbeitung des Werkstücks kann der Achskreuzwinkel dann wenigstens im Wesentlichen konstant bleiben.

Ein besonders geringer maschineller und steuerungstechnischer Aufwand wird ermöglicht, wenn die Zahnflankenmodifikationen wenigstens im Wesentlichen ausschließlich durch das Bewegen des Wälzschälwerkzeugs relativ zu dem Werkstück entlang der Längsachse und der Querachse erzeugt werden. Dann kann die Form der Zahnflankenmodifikationen also wenigstens im Wesentlichen ausschließlich durch die Bewegungen des Wälzschälwerkzeugs relativ zu dem Werkstück entlang der Längsachse und der Querachse beeinflusst werden. Eine an die zu erzeugenden Zahnflankenmodifikationen angepasste Form des Wälzschälwerkzeugs kann dann entbehrlich sein. Unabhängig davon kann der Einfachheit halber zudem vorgesehen sein, dass das mit dem Werkstück in spanendem Eingriff stehende Wälzschälwerkzeug beim Erzeugen der Zahnflankenmodifikationen ausschließlich entlang der Längsachse und der Querachse relativ zu dem Werkstück bewegt wird.

Im Hinblick auf eine kinematisch einfache Erzeugung auch komplexer Zahnflankenmodifikationen kann es sich anbieten, wenn die Querachse wenigstens im Wesentlichen parallel zu einer Geraden angeordnet ist, die tangential zur Werkstückdrehachse oder Werkzeugdrehachse durch einen Berührpunkt zwischen dem Wälzschälwerkzeug und dem Werkstück verläuft. Die entsprechende Gerade verläuft also insbesondere tangential zu der Werkstückdrehachse oder der Werkzeugdrehachse und zudem durch einen Punkt, in dem sich das Wälzschälwerkzeug und das Werkstück berühren.

Das Wälzschälwerkzeug kann zweckmäßigerweise Werkzeugzähne aufweisen, die beim Erzeugen der Zahnflankenmodifikationen in spanenden Eingriff mit dem Werkstück gelangen. Dann können die Werkzeugzähne die Schneidkanten des Wälzschälwerkzeugs bereitstellen. Unabhängig davon kann es sich hinsichtlich einer einfachen und kostengünstigen Herstellung des Wälzschälwerkzeugs anbieten, wenn die Werkzeugzähne jeweils einstückig ausgebildet sind. Alternativ oder zusätzlich können die Werkzeugzähne einfach und zweckmäßig an einem Umfang, beispielsweise einem Außenumfang oder Innenumfang, des Wälzschälwerkzeugs vorgesehen sein. Dann können vorzugsweise die Zahnköpfe der Werkzeugzähne bezogen auf die Werkzeugdrehachse in radialer Richtung nach außen oder nach innen weisen.

Unabhängig von der Ausgestaltung und Anordnung der Werkzeugzähne kann es sich der Einfachheit halber anbieten, wenn das Wälzschälwerkzeug wenigstens eine Werkzeugverzahnung aufweist, die die Werkzeugzähne umfasst. Dabei kann die Werkzeugverzahnung zweckmäßigerweise um die Werkzeugdrehachse umlaufend ausgebildet sein. Unabhängig davon kann die Werkzeugverzahnung beispielsweise als Außenverzahnung ausgebildet sein. Dies ermöglicht einen flexiblen Einsatz des Wälzschälwerkzeugs. Ein außenverzahntes Wälzschälwerkzeug ermöglicht nämlich die Erzeugung von Zahnflankenmodifikationen sowohl an Außenverzahnungen als auch an Innenverzahnungen. Wenn die Werkzeugverzahnung als Außenverzahnung ausgebildet ist, kann es sich bei der Werkstückverzahnung also grundsätzlich um eine Innenverzahnung oder eine Außenverzahnung handeln. Besondere Vorteile bietet ein außenverzahntes Wälzschälwerkzeug aufgrund der kurzen Bearbeitungszeit jedoch bei der Erzeugung von Zahnflankenmodifikationen an Innenverzahnungen. Alternativ zu einer Außenverzahnung kann die Werkzeugverzahnung eine Innenverzahnung sein. Eine Werkzeugverzahnung in Form einer Innenverzahnung bietet sich besonders zur Erzeugung von Zahnflankenmodifikationen an Außenverzahnungen an. Wenn die Werkzeugverzahnung als Innenverzahnung ausgebildet ist, kann die Werkstückverzahnung also insbesondere eine Außenverzahnung sein. Unabhängig von einer Ausbildung der Werkzeugverzahnung als Außen- oder Innenverzahnung kann es sich hinsichtlich eines vielseitigen Einsatzes des Wälzschälwerkzeugs auch anbieten, wenn das Wälzschälwerkzeug wenigstens zwei Werkzeugverzahnungen aufweist. Dann kann beispielsweise eine der Werkzeugverzahnungen eine Außenverzahnung und die andere Werkzeugverzahnung eine Innenverzahnung sein.

Um das Wälzschälwerkzeug bei der spanenden Bearbeitung des Werkstücks besonders frei bewegen zu können, ohne dass die Werkzeugzähne in ungewünschter Weise in Kontakt mit dem Werkstück gelangen, kann es sich anbieten, wenn die Zahnbreite der Werkzeugzähne höchstens 30 mm beträgt. Dies ermöglicht eine in kinematischer Hinsicht einfache Erzeugung auch komplexer Zahnflankenmodifikationen, wie beispielsweise Verschränkungen, und zwar insbesondere ohne dass die Form des Wälzschälwerkzeugs, insbesondere der Schneidkanten, an die Geometrie der zu erzeugenden Zahnflankenmodifikation angepasst ist. Vor diesem Hintergrund kann sich eine Zahnbreite der Werkzeugzähne von höchstens 20 mm, vorzugsweise höchstens 15 mm, umso mehr anbieten. Besonders bevorzugt ist in diesem Zusammenhang eine Zahnbreite der Werkzeugzähne von höchstens 10 mm. Alternativ oder zusätzlich zu einer entsprechenden Obergrenze kann vorgesehen sein, dass die Zahnbreite der Werkzeugzähne wenigstens 3 mm beträgt. Dies kann im Hinblick auf eine hohe Stabilität und Lebensdauer der Werkzeugzähne vorteilhaft sein. Aus demselben Grund kann sich eine Zahnbreite der Werkzeugzähne von wenigstens 5 mm, vorzugsweise wenigstens 6 mm, besonders anbieten. Hinsichtlich einer einfachen und kostengünstigen Ausgestaltung des Wälzschälwerkzeugs kann es sich besonders anbieten, wenn nicht nur die Werkzeugzähne eine entsprechende maximale und/oder minimale Breite aufweisen, sondern das Wälzschälwerkzeug insgesamt.

Alternativ oder zusätzlich kann es sich hinsichtlich einer kinematisch einfachen Erzeugung insbesondere komplexer Zahnflankenmodifikationen und damit einem vielseitigen Einsatz des Wälzschälwerkzeugs auch anbieten, wenn die Zahnbreite der Werkzeugzähne höchstens das 1,5-Fache der Zahnbreite der Werkstückzähne der Werkstückverzahnung beträgt. Aus demselben Grund kann es sich umso mehr anbieten, wenn die Zahnbreite der Werkzeugzähne kleiner oder gleich der Zahnbreite der Werkstückzähne ist. Besonders bevorzugt ist es in diesem Zusammenhang, wenn die Zahnbreite der Werkzeugzähne höchstens das 0,5-Fache, insbesondere höchstens das 0,1-Fache, der Zahnbreite der Werkstückzähne beträgt.

Ganz grundsätzlich wird unter der Zahnbreite der Werkzeugzähne vorzugsweise die Erstreckung der Werkzeugzähne entlang der Werkzeugdrehachse verstanden. Unabhängig davon ist mit der Zahnbreite der Werkstückzähne vorzugsweise die Erstreckung der Werkstückzähne entlang der Werkstückdrehachse gemeint.

Eine konstruktiv einfache und zugleich besonders zweckmäßige Konstruktion des Wälzschälwerkzeugs wird ermöglicht, wenn das Wälzschälwerkzeug wenigstens im Wesentlichen die Form einer Scheibe aufweist. Dann kann beispielsweise die Erstreckung des Wälzschälwerkzeugs senkrecht zur Werkzeugdrehachse, insbesondere um ein Vielfaches, größer sein als die Erstreckung des Wälzschälwerkzeugs entlang der Werkzeugdrehachse. Alternativ oder zusätzlich zu einer scheibenförmigen Ausgestaltung kann das Wälzschälwerkzeug wenigstens im Wesentlichen die Form eines Rings aufweisen. Eine ringförmige Ausgestaltung kann sich hinsichtlich einer einfachen Aufnahme des Wälzschälwerkzeugs beispielsweise an einer Werkzeugspindel und/oder bei einer Ausbildung der Werkstückverzahnung als Innenverzahnung anbieten.

Das Werkstück kann wenigstens im Wesentlichen aus einem metallischen Werkstoff gebildet sein. Metallische Werkstücke sind in der Praxis besonders häufig mit Zahnflankenmodifikationen zu versehen, sodass die Vorteile der Erfindung besonders zum Tragen kommen. Dies gilt umso mehr für Werkstücke, die wenigstens im Wesentlichen aus einem Stahlwerkstoff gebildet sind. Dabei bietet sich als Stahlwerkstoff insbesondere ein Einsatzstahl, beispielsweise 20MnCr5, an.

Unabhängig vom Werkstoff des Werkstücks kann das Wälzschälwerkzeug wenigstens im Wesentlichen aus einem Schnellarbeitsstahl, der in der Praxis häufig auch als "HSS" bezeichnet wird, und/oder einem Hartmetallwerkstoff gebildet sein. Dies ermöglicht gute Werkzeugeigenschaften zu moderaten Kosten. Zur Erhöhung der Werkzeugstandzeit kann der Schnellarbeitsstahl und/oder der Hartmetallwerkstoff dabei beschichtet sein.

Grundsätzlich ist es denkbar, dass die Werkstückverzahnung mit einem anderen Werkzeug als dem Wälzschälwerkzeug und/oder einem anderen Bearbeitungsverfahrens als Wälzschälen an dem Werkstück erzeugt wird und im Anschluss daran die Zahnflankenmodifikationen in die auf diese Weise erzeugte Werkstückverzahnung mit dem Wälzschälwerkzeug eingebracht werden. Hinsichtlich kurzer Taktzeiten bietet es sich jedoch besonders an, wenn nicht nur die Zahnflankenmodifikationen mit dem Wälzschälwerkzeug erzeugt werden, sondern auch die Werkstückverzahnung durch Wälzschälen mit dem Wälzschälwerkzeug an dem Werkstück erzeugt wird. Dabei wird unter dem Erzeugen der Werkstückverzahnung vorzugsweise das Einbringen der Zahnlücken zwischen die Werkstückzähne der Werkstückverzahnung in einen unverzahnten oder lediglich grob vorverzahnten Abschnitt des Werkstücks verstanden, wobei das Einbringen in einen unverzahnten Abschnitt hinsichtlich kurzer Herstellungszeiten besonders bevorzugt sein kann. Beim Erzeugen der Werkstückverzahnung kann also insbesondere die angestrebte Makrogeometrie des Werkstücks hergestellt werden. Unabhängig davon kann das Erzeugen der Werkstückverzahnung bedarfsweise in zwei oder mehr Durchläufen erfolgen, wobei zweckmäßigerweise nach jedem Durchlauf die Eingriffstiefe des Wälzschälwerkzeugs in das Werkstück bezogen auf den Kopfkreisdurchmesser der Werkstückverzahnung vergrößert werden kann.

Wenn das Erzeugen der Werkstückverzahnung mit dem Wälzschälwerkzeug erfolgt, kann mit dem Wälzschälwerkzeug beispielsweise zunächst die Werkstückverzahnung ohne die Zahnflankenmodifikationen erzeugt werden. Im Anschluss daran können dann an der erzeugten Werkstückverzahnung die Zahnflankenmodifikationen erzeugt werden, wobei lediglich noch wenige Mikrometer des Werkstückmaterials abgetragen werden können. Dann wird das Wälzschälwerkzeug beim Erzeugen der Werkstückverzahnung also bedarfsweise entlang der Längsachse bewegt, ohne dabei zusätzlich senkrecht zur Längsachse bewegt zu werden. Hinsichtlich kurzer Bearbeitungszeiten kann es jedoch besonders bevorzugt sein, wenn das Erzeugen der Zahnflankenmodifikationen wenigstens teilweise während des Erzeugens der Werkstückverzahnung erfolgt. Dann werden die Zahnflankenmodifikationen also vorzugsweise wenigstens teilweise zusammen mit dem Einbringen der Zahnlücken der Werkstückverzahnung in das Werkstück erzeugt. Unabhängig davon können besonders kurze Bearbeitungszeiten erreicht werden, wenn das Erzeugen der Zahnflankenmodifikationen nicht nur teilweise, sondern wenigstens im Wesentlichen während des Erzeugens der Werkstückverzahnung erfolgt.

In der Praxis ist häufig nicht nur ein Werkstück mit Zahnflankenmodifikationen zu versehen, sondern mehrere Werkstücke. Es kann sich daher anbieten, wenn mit dem Wälzschälwerkzeug nacheinander an wenigstens zwei Werkstücken Zahnflankenmodifikationen erzeugt werden. Dabei kann es einfach und zweckmäßig sein, wenn das Wälzschälwerkzeug vor der Bearbeitung der wenigstens zwei Werkstücke an einer Werkzeugspindel, beispielsweise einer Werkzeugmaschine, angeordnet wird und bis nach der Bearbeitung der wenigstens zwei Werkstücke an der Werkzeugspindel angeordnet bleibt.

Nachfolgend wird die Erfindung anhand einer lediglich ein Ausführungsbeispiel darstellenden Zeichnung näher erläutert. In der Zeichnung zeigt jeweils schematisch
- Fig. 1: ein Ausschnitt einer Werkzeugmaschine zur Durchführung des erfindungsgemäßen Verfahrens in einer perspektivischen Ansicht,
- Fig. 2A-B: ein Ausschnitt einer Werkstückverzahnung mit und ohne Zahnflankenmodifikationen jeweils in einer perspektivischen Ansicht,
- Fig. 3A-B: ein Wälzschälwerkzeug der Werkzeugmaschine aus Fig. 1 in einer Draufsicht und einer Seitenansicht,
- Fig. 4A-6B: das Wälzschälwerkzeug und das Werkstück aus Fig. 1 in verschiedenen Stellungen relativ zueinander jeweils in einer Seitenansicht und einer Draufsicht.

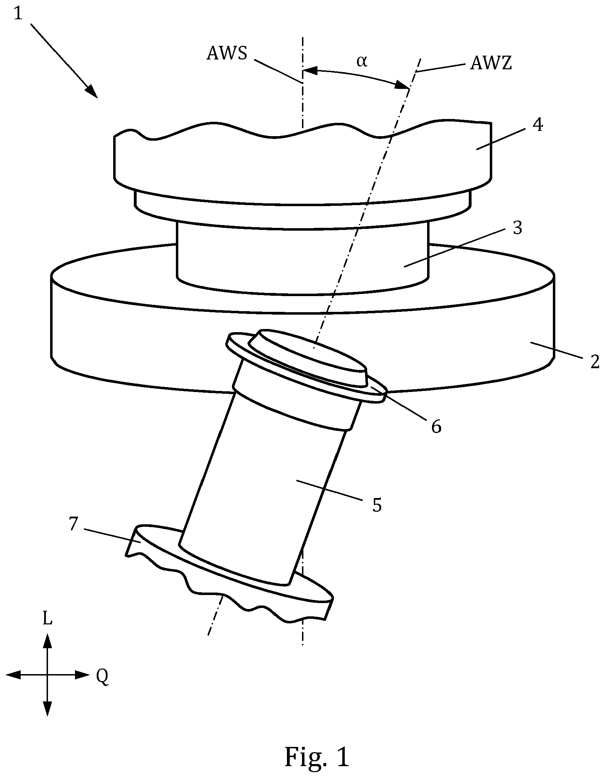

In der Fig. 1 sind ein Ausschnitt einer Werkzeugmaschine 1 und ein Werkstück 2 in einer perspektivischen Ansicht dargestellt. Die Werkzeugmaschine 1 umfasst eine Werkstückspindel 3, die das Werkstück 2 trägt. Die Werkstückspindel 3 ist mit einem Werkstückdrehantrieb 4 gekoppelt, mittels dem die Werkstückspindel 3 und darüber das von der Werkstückspindel 3 getragene Werkstück 2 um eine Werkstückdrehachse AWS drehend angetrieben werden können.

Die Werkzeugmaschine 1 weist weiter eine Werkzeugspindel 5 auf. Die Werkzeugspindel 5 trägt ein scheibenförmiges Wälzschälwerkzeug 6, das an der Werkzeugspindel 5 eingespannt ist. Die Werkzeugspindel 5 ist mit einem Werkzeugdrehantrieb 7 gekoppelt, mittels dem die Werkzeugspindel 5 und das von der Werkzeugspindel 5 getragene Wälzschälwerkzeug 6 um eine Werkzeugdrehachse AWZ drehend angetrieben werden können. Die Werkzeugdrehachse AWZ ist vorliegend in einem Achskreuzwinkel α von ca. 20 ° schräg und windschief zu der Werkstückdrehachse AWS angeordnet.

Die Werkzeugmaschine 1 weist ferner zwei nicht dargestellte, beispielsweise als Linearantriebe ausgebildete, Stellantriebe auf, um die Werkzeugspindel 5 zusammen mit dem Wälzschälwerkzeug 6 relativ zu der Werkstückspindel 3 und dem Werkstück 2 zu bewegen zu können. Dabei ist einer der Stellantriebe dazu vorgesehen, die Werkzeugspindel 5 translatorisch entlang einer Längsachse L, die vorliegend wenigstens im Wesentlichen parallel zur Werkstückdrehachse AWS angeordnet ist, relativ zu der Werkstückspindel 3 zu bewegen. Der andere Stellantrieb ist dazu vorgesehen, die Werkzeugspindel 5 translatorisch entlang einer zu der Längsachse L wenigstens im Wesentlichen senkrechten Querachse Q relativ zu der Werkstückspindel 3 zu bewegen. Darüber hinaus weist die Werkzeugmaschine 1 eine ebenfalls nicht dargestellte Einstelleinrichtung auf, mit der der Achskreuzwinkel α eingestellt und fixiert werden kann.

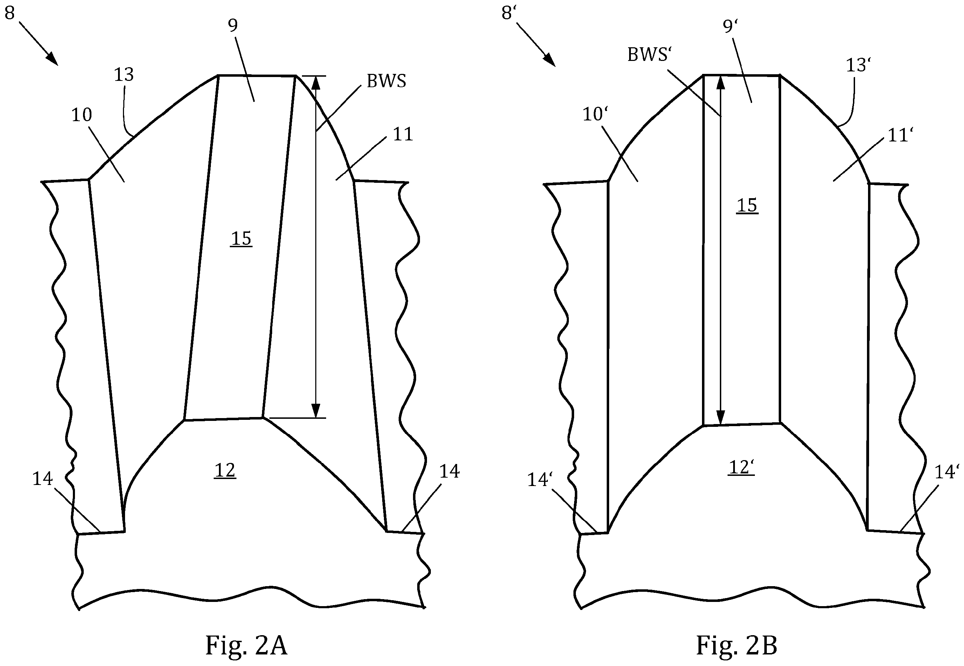

In den Fig. 2A-B sind ein Ausschnitt einer an dem Werkstück 2 zu erzeugenden Werkstückverzahnung 8 mit Zahnflankenmodifikationen und ein Ausschnitt einer Werkstückverzahnung 8' ohne Zahnflankenmodifikationen jeweils im Bereich eines Werkstückzahns 9,9' der Werkstückverzahnung 8,8' in einer perspektivischen Ansicht dargestellt. Die Werkstückzähne 9,9' weisen jeweils zwei gegenüberliegende Zahnflanken 10,10',11,11' auf, die sich jeweils von einer Stirnseite 12,12' des Werkstückzahns 9,9' zur gegenüberliegenden Stirnseite 13,13' des Werkstückzahns 9,9' und vom Fußkreis 14,14' der Werkstückverzahnung 8,8' zur Kopffläche 15,15'des Werkstückzahns 9,9' erstrecken.

Der in der Fig. 2A dargestellte Werkstückzahn 9 weist an beiden Zahnflanken 10,11 eine Zahnflankenmodifikation in Form einer Verschränkung auf. Dabei ändern sich die Querschnitte der Zahnflanken 10,11 vorliegend jeweils kontinuierlich über die gesamte Zahnbreite BWS des Werkstückzahns 9. Die Zahnflankenmodifikationen der Zahnflanken 10,11 erstrecken sich beim dargestellten und insoweit bevorzugten Ausführungsbeispiel also über die gesamte Zahnbreite BWS des Werkstückzahns 9.

Der in der Fig. 2B dargestellte Werkstückzahn 9' weist dagegen keine Zahnflankenmodifikation auf. Der Werkstückzahn 9' weist stattdessen über die gesamte Zahnbreite BWS' wenigstens im Wesentlichen den gleichen Querschnitt auf.

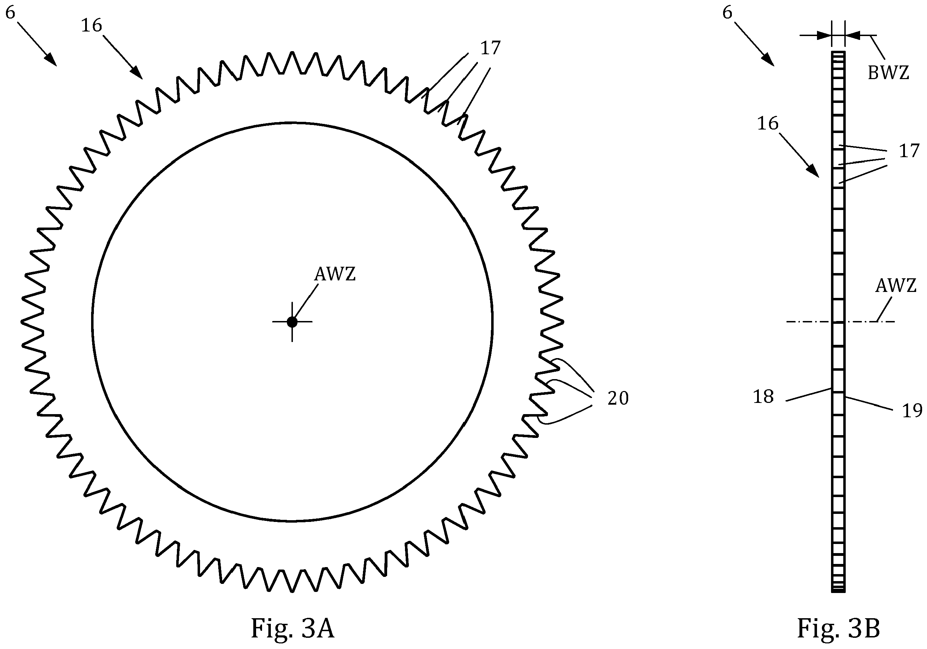

In den Fig. 3A-B ist das Wälzschälwerkzeug 6 in einer Draufsicht und einer Seitenansicht dargestellt. Das vorliegend scheibenförmig und ringförmig ausgebildete Wälzschälwerkzeug 6 weist an seinem Außenumfang eine um die Werkzeugdrehachse AWZ umlaufende Werkzeugverzahnung 16 auf, die eine Vielzahl von Werkzeugzähnen 17 umfasst. Die Werkzeugzähne 17 weisen an ihren gegenüberliegenden Stirnseiten 18,19 jeweils Schneidkanten 20 auf, die sich beispielsweise über das komplette Profil des jeweiligen Werkzeugzahns 17 erstrecken können.

Beim dargestellten und insoweit bevorzugten Ausführungsbeispiel erstrecken sich die Werkzeugzähne 17 über die gesamte Breite des Wälzschälwerkzeugs 6. Vorliegend entspricht mithin die Zahnbreite BWZ der Werkzeugzähne 17 der Breite des Wälzschälwerkzeugs 6. Dies kann bevorzugt sein, ist jedoch nicht zwingend erforderlich. Die Zahnbreite BWZ der Werkzeugzähne 17 beträgt vorliegend ca. 8 mm.

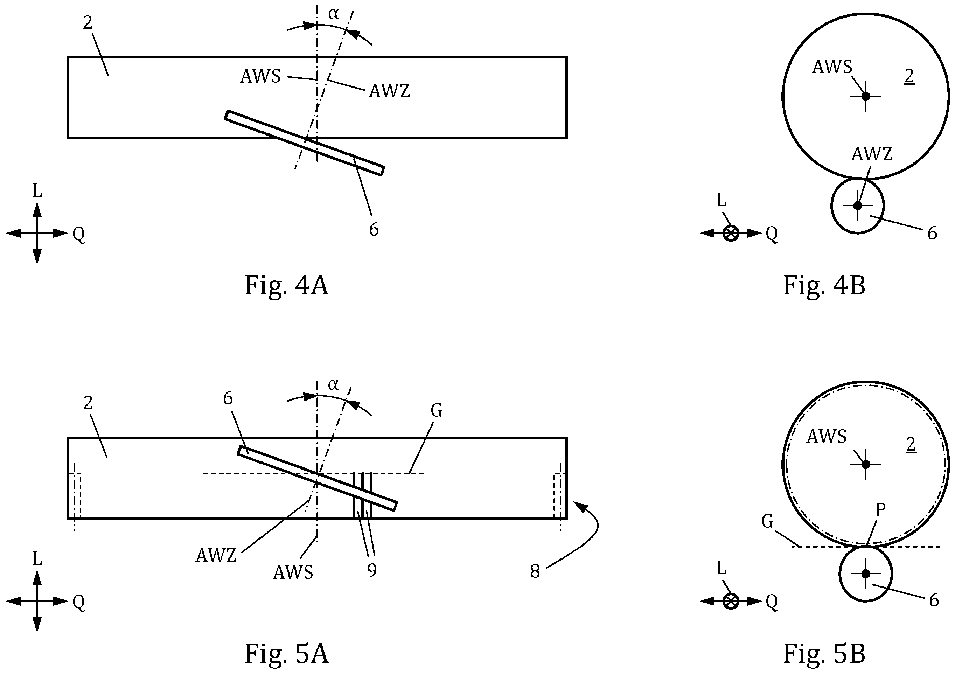

In den Fig. 4A-6B sind das Werkstück 2 und das Wälzschälwerkzeug 6 in verschiedenen Stellungen relativ zueinander jeweils in einer Seitenansicht und einer Draufsicht dargestellt. In den Fig. 4A-B sind das noch unverzahnte Werkstück 2 und das Wälzschälwerkzeug 6 außer Eingriff. Um die Werkstückverzahnung 8 mit den Zahnflankenmodifikationen an dem Werkstück 2 zu erzeugen, wird das um die Werkzeugdrehachse AWZ drehend angetriebene Wälzschälwerkzeug 6 in spanenden Eingriff mit dem um die Werkstückdrehachse AWS drehend angetriebenen Werkstück 2 gebracht. Dazu wird das Wälzschälwerkzeug 6 vorliegend entlang einer zu der Werkstückdrehachse AWS wenigstens im Wesentlichen parallelen Längsachse L translatorisch auf das Werkstück 2 zubewegt.

Zum Einbringen der Zahnlücken zwischen die Werkstückzähne 9 der Werkstückverzahnung 8 wird das mit dem Werkstück 2 in spanendem Eingriff stehende Wälzschälwerkzeug 6 sodann weiter relativ zu dem Werkstück 2 entlang der Längsachse L bewegt. Währenddessen wird das Wälzschälwerkzeug 6 zusätzlich translatorisch entlang einer zu der Längsachse L wenigstens im Wesentlichen senkrechten Querachse Q relativ zu dem Werkstück 2 bewegt, um zusammen mit dem Einbringen der Werkstückverzahnung 8 die Zahnflankenmodifikationen an den Werkstückzähnen 9 zu erzeugen. Der Achskreuzwinkel α zwischen der Werkzeugdrehachse AWZ und der Werkstückdrehachse AWS wird dabei wenigstens im Wesentlichen konstant bei einem Wert von ca. 20° gehalten.

In den Fig. 5A-B steht das um die Werkzeugdrehachse AWZ rotierende Wälzschälwerkzeug 6 mit dem um die Werkstückdrehachse AWS rotierenden Werkstück 2 in spanendem Eingriff. Die vorliegend als Außenverzahnung 8 ausgebildete Werkstückverzahnung 8 des Werkstücks 2 ist teilweise erzeugt, wobei der besseren Übersichtlichkeit halber lediglich einzelne Werkstückzähne 9 der Werkstückverzahnung 8 dargestellt sind.

Das Wälzschälwerkzeug 6 wird weiter relativ zu dem Werkstück 2 entlang der Längsachse L und der Querachse Q bewegt, um die Werkstückverzahnung 8 mit den Zahnflankenmodifikationen vorliegend über die gesamte Breite des Werkstücks 2 zu erzeugen. Die Querachse Q ist dabei wenigstens im Wesentlichen parallel zu einer Geraden G angeordnet, die tangential zur Werkstückdrehachse AWS und durch einen Berührpunkt P verläuft, in dem das Wälzschälwerkzeug 6 und das Werkstück 2 einander berühren.

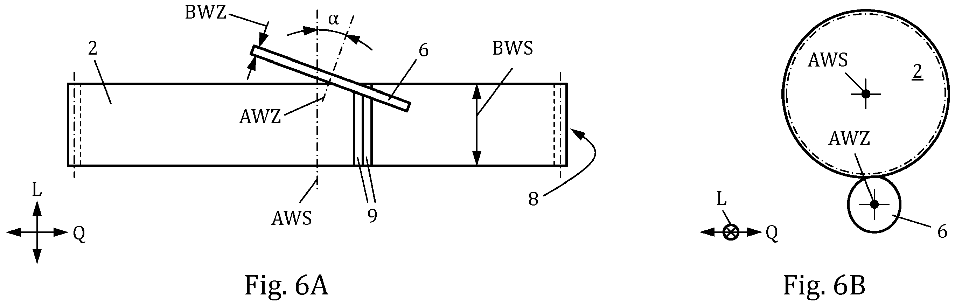

In den Fig. 6A-B sind das Wälzschälwerkzeug 6 und das Werkstück 2 wieder außer Eingriff. Die Werkstückverzahnung 8 ist über die gesamte Breite des Werkstücks 2 zumindest teilweise erzeugt. Dabei beträgt die Zahnbreite BWS der Werkstückzähne 9 vorliegend ca. 80 mm. Das Verhältnis der Zahnbreite BWZ der Werkzeugzähne 17, die vorliegend ca. 8 mm beträgt, zur Zahnbreite BWS der Werkstückzähne 9 beträgt beim dargestellten und insoweit bevorzugten Ausführungsbeispiel mithin ca. 0,1.

Von der in den Fig. 6A-B dargestellten Stellung kann das Wälzschälwerkzeug 6 bedarfsweise wieder zurück in die in den Fig. 4A-B dargestellte Stellung verstellt werden, beispielsweise um in wenigstens einem weiteren Durchlauf die Werkstückverzahnung 8 fertigzustellen. Zwischen den wenigstens zwei Durchläufen kann dann zweckmäßigerweise der Achsabstand zwischen der Werkstückdrehachse AWS und der Werkzeugdrehachse AWZ verringert werden, um die Eingriffstiefe des Wälzschälwerkzeugs 6 in das Werkstück 2 zu vergrößern.

Wenn das Erzeugen der Werkstückverzahnung 8 in mehr als einem Durchlauf erfolgt, ist es nicht zwingend notwendig, dass das Wälzschälwerkzeug 6 in jedem der Durchläufe zusätzlich zur Bewegung entlang der Längsachse L auch entlang der Querachse Q bewegt wird, um die Zahnflankenmodifikationen zu erzeugen, auch wenn dies nicht ausgeschlossen ist. Wenn mehrere Durchläufe vorgesehen sind, kann das Wälzschälwerkzeug 6 beispielsweise in wenigstens einem Durchlauf lediglich entlang der Längsachse L und zur Erzeugung der Zahnflankenmodifikationen in wenigstens einem darauffolgenden Durchlauf zusätzlich zur Bewegung entlang der Längsachse L entlang der Querachse Q bewegt werden.

### Bezugszeichenliste

- 1: Werkzeugmaschine
- 2: Werkstück
- 3: Werkstückspindel
- 4: Werkstückdrehantrieb
- 5: Werkzeugspindel
- 6: Wälzschälwerkzeug
- 7: Werkzeugdrehantrieb
- 8,8': Werkstückverzahnung
- 9,9': Werkstückzahn
- 10,10',11,11': Zahnflanke eines Werkstückzahns
- 12,12',13,13': Stirnseite eines Werkstückzahns
- 14,14': Fußkreis
- 15,15': Kopffläche
- 16: Werkzeugverzahnung
- 17: Werkzeugzahn
- 18,19: Stirnseite eines Werkzeugzahns
- 20: Schneidkante
- AWS: Werkstückdrehachse
- AWZ: Werkzeugdrehachse
- BWS,BWS': Zahnbreite eines Werkstückzahns
- BWZ: Zahnbreite eines Werkzeugzahns
- G: Gerade
- L: Längsachse
- P: Berührpunkt
- Q: Querachse
- α: Achskreuzwinkel

## Patentansprüche

1. Verfahren zum Erzeugen von Zahnflankenmodifikationen, insbesondere Verschränkungen, an Zahnflanken (10,10',11,11') wenigstens einer Werkstückverzahnung (8,8') wenigstens eines Werkstücks (2), insbesondere Zahnrads (2), durch Wälzschälen mittels eines Wälzschälwerkzeugs (6),
- bei dem das Werkstück (2) um eine Werkstückdrehachse (AWS) und das Wälzschälwerkzeug (6) um eine in einem Achskreuzwinkel (α) zu der Werkstückdrehachse (AWS) schräg, insbesondere windschief, angeordnete Werkzeugdrehachse (AWZ) drehend angetrieben werden,
- bei dem das, insbesondere um die Werkzeugdrehachse (AWZ) drehende, Wälzschälwerkzeug (6) in spanenden Eingriff mit dem, insbesondere um die Werkstückdrehachse (AWS) drehenden, Werkstück (2) gebracht wird,
- bei dem das mit dem Werkstück (2) in spanendem Eingriff stehende und um die Werkzeugdrehachse (AWZ) drehende Wälzschälwerkzeug (6) relativ zu dem um die Werkstückdrehachse (AWS) drehenden Werkstück (2) entlang einer zu der Werkstückdrehachse (AWS) oder der Werkzeugdrehachse (AWZ) wenigstens im Wesentlichen parallelen Längsachse (L) bewegt wird und
- bei dem zum Erzeugen der Zahnflankenmodifikationen das sich entlang der Längsachse (L) bewegende Wälzschälwerkzeug (6) relativ zu dem Werkstück (2) entlang wenigstens einer zu der Längsachse (L) wenigstens im Wesentlichen senkrechten Querachse (Q) bewegt wird.

2. Verfahren nach Anspruch 1,
- bei dem der Achskreuzwinkel (α) während des Erzeugens der Zahnflankenmodifikationen wenigstens im Wesentlichen unverändert beibehalten wird und
- bei dem, vorzugsweise, die Zahnflankenmodifikationen wenigstens im Wesentlichen ausschließlich durch das Bewegen des Wälzschälwerkzeugs (6) relativ zu dem Werkstück (2) entlang der Längsachse (L) und der Querachse (Q) erzeugt werden.

3. Verfahren nach Anspruch 1 oder 2,
bei dem die Querachse (Q) wenigstens im Wesentlichen parallel zu einer tangential zur Werkstückdrehachse (AWS) oder Werkzeugdrehachse (AWZ) durch einen Berührpunkt (P) zwischen dem Wälzschälwerkzeug (6) und dem Werkstück (2) verlaufenden Geraden (G) angeordnet ist.

4. Verfahren nach einem der Ansprüche 1 bis 3,
- bei dem das Wälzschälwerkzeug (6) in spanenden Eingriff mit dem Werkstück (2) gelangende Werkzeugzähne (17) aufweist,
- bei dem, vorzugsweise, das Wälzschälwerkzeug (6) wenigstens eine die Werkzeugzähne (17) umfassende, insbesondere um die Werkzeugdrehachse (AWZ) umlaufende und/oder als Außenverzahnung (16) oder Innenverzahnung ausgebildete, Werkzeugverzahnung (16) aufweist.

5. Verfahren nach Anspruch 4,
bei dem die Zahnbreite (BWZ) der Werkzeugzähne (17) höchstens 30 mm, vorzugsweise höchstens 20 mm, insbesondere höchstens 15 mm, besonders bevorzugt höchstens 10 mm, und/oder wenigstens 3 mm, vorzugsweise wenigstens 5 mm, insbesondere wenigstens 6 mm, beträgt.

6. Verfahren nach Anspruch 4 oder 5,
bei dem das Verhältnis der Zahnbreite (BWZ) der Werkzeugzähne (17) zur Zahnbreite (BWS,BWS') der Werkstückzähne (9,9') der Werkstückverzahnung (8,8') höchstens 1,5, vorzugsweise höchstens 1, insbesondere höchstens 0,5, besonders bevorzugt höchstens 0,1, beträgt.

7. Verfahren nach einem der Ansprüche 1 bis 6,
bei dem das Wälzschälwerkzeug (6) wenigstens im Wesentlichen scheibenförmig und/oder ringförmig ausgebildet ist.

8. Verfahren nach einem der Ansprüche 1 bis 7,
- bei dem das Werkstück (2) wenigstens im Wesentlichen aus einem metallischen Werkstoff, vorzugsweise Stahlwerkstoff, insbesondere Einsatzstahl, beispielsweise 20MnCr5, gebildet ist und/oder
- bei dem das Wälzschälwerkzeug (6) wenigstens im Wesentlichen aus einem Schnellarbeitsstahl und/oder Hartmetallwerkstoff gebildet ist.

9. Verfahren nach einem der Ansprüche 1 bis 8,
- bei dem die Werkstückverzahnung (8,8') durch Wälzschälen mittels des Wälzschälwerkzeugs (6) an dem Werkstück (2) erzeugt wird und
- bei dem das Erzeugen der Zahnflankenmodifikationen wenigstens teilweise, insbesondere wenigstens im Wesentlichen, während des Erzeugens der Werkstückverzahnung (8,8') erfolgt.

10. Verfahren nach einem der Ansprüche 1 bis 9,
bei dem mit dem Wälzschälwerkzeug (6) nacheinander an wenigstens zwei Werkstücken (2) Zahnflankenmodifikationen erzeugt werden.
